# EUROPÄISCHE PATENTSCHRIFT

(11) **EP 2 020 315 B1**
(45) Veröffentlichungstag und Bekanntmachung des Hinweises auf die Patenterteilung: **17.08.2011**
(21) Anmeldenummer: 08011677.5
(22) Anmeldetag: 27.06.2008
(51) Int. Cl.: B60H 1/00

(54) **Verfahren zum Betreiben einer Klimaanlage**
Method for operating an air conditioning system
Procédé d'exploitation d'un système de climatisation

(30) Priorität: 31.07.2007 DE 102007036299
(43) Veröffentlichungstag der Anmeldung: 04.02.2009
(73) Patentinhaber: Behr GmbH & Co. KG, 70469 Stuttgart (DE)
(72) Erfinder: Baruschke, , Wilhelm, 73117 Wangen (DE); Liermann, Andreas, 67117 Limburgerhof (DE); Lochmahr, Karl, Vaihingen/Enz (DE); Pitz, Eric, 70199 Stuttgart (DE)

(56) Entgegenhaltungen:
- DE-A1- 10 247 262
- DE-A1- 10 349 291
- DE-A1- 19 609 048
- DE-A1-102006 021 291
- JP-A- 61 150 818
- US-A- 5 277 038

## Beschreibung

Die Erfindung betrifft ein Verfahren zum Betreiben einer Klimaanlage, insbesondere einer Fahrzeug-Klimaanlage, gemäß dem Oberbegriff des Anspruches 1.

Zur Klimatisierung eines Kraftfahrzeug-Innenraums mittels einer Klimaanlage ist sowohl bei fahrendem als auch bei stehendem Kraftfahrzeug ein Antrieb des Kompressors erforderlich, der Teil des Kältemittel-Kreislaufs der Klimaanlage ist. Üblicherweise wird der Kompressor vom Kraftfahrzeug-Motor angetrieben. Für einen Idle-stop-Betrieb, d.h. einen kurzfristigen Stopp des Motors, sind Klimaanlagen mit einem Kältespeicher bekannt, welcher die Kühlleistung über eine gewisse Zeit aufrechterhält.

Aus der DE 103 43 238 A1 ist ein Verfahren zum Betreiben einer Kraftfahrzeug-Klimaanlage bekannt, wobei die. Leistungsregelung des Kompressors derart erfolgt, dass im Schiebebetrieb des Kraftfahrzeugs, also beispielsweise bei einer Talfahrt, bei welcher zum Bremsen der Motor verwendet wird, eine niedrigere Verdampfertemperatur eines Verdampfers des Kältemittel-kreislaufs der Klimaanlage als im Lastbetrieb eingestellt wird. Dadurch ist es möglich, die gespeicherte Kältekapazität unter Last, also bspw. bei Bergfahrten, energiesparend wieder abzurufen. Durch eine entsprechende Regelung ist ein energiesparender Betrieb der Klimaanlage möglich. Hierbei kann im Schiebebetrieb des Fahrzeugs die Verdampfertemperatur zumindest zeitweise auf weniger als 0°C eingestellt werden, wodurch sich durch gefrorene Luftfeuchtigkeit ein Eisansatz am Verdampfer bildet, der als zusätzlicher Energiespeicher nutzbar ist, Um ein zu starkes Vereisen zu vermeiden, sind die Betriebsphasen, in denen der Kältemittelkreislauf der Klimaanlage mit Verdampfertemperaturen unter 0°C betrieben wird, begrenzt.

Aus der DE 102 47 262 A1 ist ferner ein Verfahren zur Verdampfungstemperaturregelung bei einer Kraftfahrzeug-Klimaanlage bekannt, wobei die Klimaanlage einen Latentkältespeicher aufweist. Hierbei wird die Verdampfungstemperatur des Kältemittels im Verdampfer bedarfsabhängig auf einen Wert eingestellt, der zwischen einer Minimaltemperatur und einer unterhalb einer Phasenübergangstemperatur des Latentmediums liegenden Maximaltemperatur liegt.

Aus der nachveröffentlichten DE 10 2006 021 291 A1 ist ein Verfahren zum Betrieb einer Kraftfahrzeug-Klimaanlage mit einem Kältemittelkreislauf, in welchem mindestens ein Kompressor, mindestens ein Kondensator und mindestens ein Verdampfer angeordnet ist, bekannt, wobei zumindest ein Teilbereich des Verdampfers als Speicherverdampfer mit einem Kältespeicher ausgebildet ist, in welchem ein Latentmedium angeordnet ist. Hierbei ist ein Verfahren zum Beladen des Kältespeichers offenbart, gemäß dem die Temperatur des Kältemittels im Speicherverdampfer auf eine Temperatur unterhalb der Gefriertemperatur des Latentmediums abgesenkt und die Temperatur des Kältemittels im Speicherverdampfer nach einer Zeitspanne wieder erhöht wird, wobei die erhöhte Temperatur über der Gefriertemperatur und unter der Schmelztemperatur des Latentmediums liegt. Das Beladen mit dieser Temperaturabfolge erfolgt vorzugsweise im Schiebebetrieb des Kraftfahrzeugs, bei dem überschüssige Leistung vorhanden ist, die auf diese Weise genutzt werden kann. Gegebenenfalls kann eine entsprechende Beladung jedoch auch beim Normalbetrieb des Kraftfahrzeugs erfolgen. Die Temperaturerhöhung auf eine Temperatur unterhalb der Schmelztemperatur des Latentmediums reicht aus, um das Latentmedium in seinem gefrorenen Zustand zu halten, so dass bei Bedarf die gespeicherte Kälte unter Durchlaufen eines Phasenwechsels abgegeben und dadurch die Kühlleistung der Klimaanlage zumindest kurzzeitig sichergestellt werden kann.

DE 103 49 291 A1 offenbart ein Verfahren nach dem Oberbegriff des Anspruchs 1.

Es ist Aufgabe der Erfindung, ein verbessertes Verfahren zum Betreiben einer Klimaanlage zur Verfügung zu stellen.

Diese Aufgabe wird gelöst durch ein Verfahren mit den Merkmalen des Anspruchs 1. Vorteilhafte Ausgestaltungen sind Gegenstand der Unteransprüche.

Erfindungsgemäß ist ein Verfahren zum Betreiben einer Klimaanlage mit einem Verdampfer, der in einem von einem Kältemittelkompressor umgewälzten Kältemittelkreislauf angeordnet ist, und einem Heizer, der in einem Kühlmittelkreislauf, insbesondere dem Motorkühlmittelkreislauf, angeordnet ist, vorgesehen, wobei der Heizer als Kältemittelspeicher beladen wird und temporär die Funktion des Verdampfers übernimmt und die durchströmende Luft kühlt. Dadurch, dass der Heizer die Speicherfunktion übernimmt, kann auf ein zusätzliches Kältespeichermedium, zusätzliche Bauteile und somit zusätzliches Gewicht verzichtet werden. Die Umrüstung ist, da im Wesentlichen vorhandene Komponenten der Klimaanlage für die abgeänderte Funktion verwendet werden und die wesentlichen Änderungen regelungstechnischer Art sind, sehr einfach und kostengünstig.

Beim Kältemittelkompressor handelt es sich besonders bevorzugt um einen Fixvolumen-Kompressor. Dieser besonders kostengünstige Kompressor kann über im Wesentlichen die gesamte Betriebsdauer desselben in seinem optimalen Betriebpunkt betrieben werden, wobei die überschüssige Kälteleistung im Heizer zwischengespeichert und bei Bedarf an die den Heizer durchströmende Luft abgegeben werden kann. Dies ermöglicht einen in Bezug auf den Spritverbrauch optimierten Betrieb des Kompressors.

Eine Temperaturklappe ist vorgesehen, welche die Verteilung des Luftstroms auf den Heizer und den Kaltluft-Bypass ermöglicht, wobei die Temperaturklappe zum Beladen des Heizers als Kältespeicher den Kaltluft-Bypass zumindest teilweise versperrt, so dass kalte Luft direkt durch den Heizer geleitet wird. In diesem Betriebszustand ist der Heizer nicht von Kühlmittel durchströmt, d.h. es wird ausschließlich das sich im Heizer befindliche Kühlmittel gekühlt, der übrige, umgewälzte Teil des Kühlmittelkreislaufs ist nicht betroffen. Die Temperaturklappe versperrt in einem Kühlbetrieb unter Nutzung der im Heizer gespeicherten Kälte den Kaltluft-Bypass zumindest teilweise, so dass die Luft den kalten Heizer durchströmt und somit gekühlt in den Fahrzeuginnenraum gelangt.

Im Kühlmittelkreislauf, in welchem der Heizer angeordnet ist, ist, in normaler Strömungsrichtung des Kühlmittels nach dem Heizer ein regelbares Absperrventil vorgesehen, welches bei einer Funktion des Heizers als Kältespeicher geschlossen ist.

Die Regelung der Klimaanlage erfolgt bevorzugt derart, dass bei mittleren Umgebungstemperaturen von über 20°C, insbesondere von über 25°C, und einer darunterliegenden, eingestellten Temperatur für die Regelung der Fahrzeuginnenraum-Temperatur der Heizer bei überschüssiger Kälteleistung des Verdampfers als Kältespeicher beladen wird. Bei derartig hohen Temperaturen ist ein Reheat-Betrieb des Heizers in aller Regel nicht erforderlich, während eine Kühlung gewünscht wird, so dass überschüssige Energie, die bspw. bei Talfahrten unter Nutzung der Motorbremse anfällt, im Heizer in der Form von Kälte gespeichert werden kann. Diese gespeicherte Kälte kann bei Motorstopps, z.B. an einer Ampel, oder bei kurzzeitigen Leistungsbedarfsspitzen, z.B. bei Beschleunigungen, abgerufen werden, so dass der Energiebedarf durch eine verbesserte Nutzung und eine Speicherfunktion verringert werden kann.

Beim Kompressor des Kältemittelkreislaufs handelt es sich vorzugsweise um einen Fixvolumen-Kompressor, bei dem die Kompressorantriebsleistung im ausgeschalteten Zustand im Falle einer Magnetkupplung im Wesentlichen null ist, d.h. der Energieverlust ist sehr gering.

Im Folgenden wird die Erfindung anhand eines Ausführungsbeispiels unter Bezugnahme auf die beiliegende Zeichnung näher erläutert. Hierbei zeigen
- Fig. 1: eine schematische Darstellung einer Klimaanlage samt Regelung gemäß dem Ausführungsbeispiel,
- Fig. 2: ein Flussdiagramm, welches das Prinzip der Regelung darstellt, und
- Fig. 3: ein Blockschaltbild zur Verdeutlichung der Regelung der Lufttemperatur.

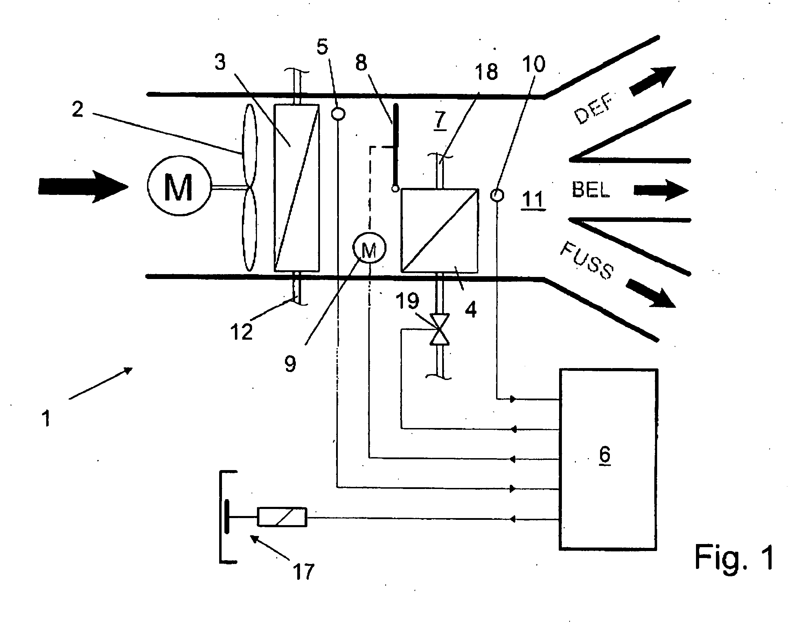

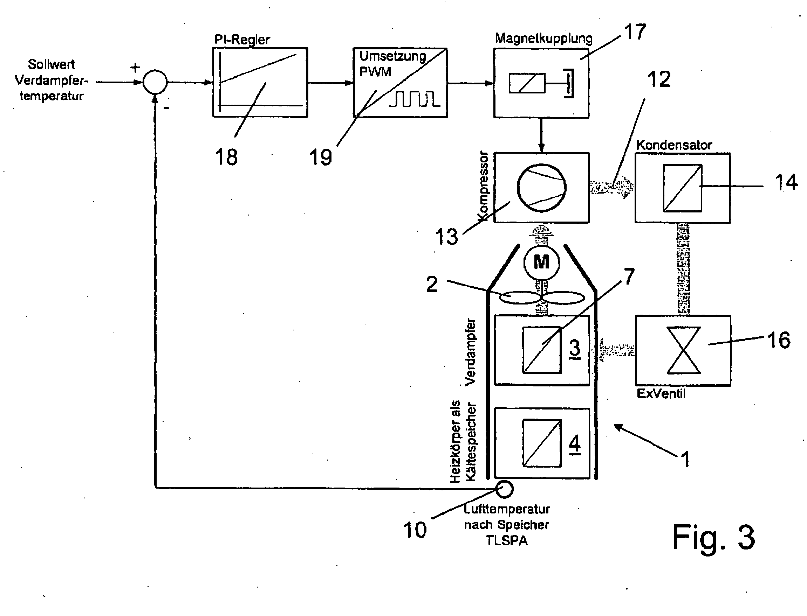

Eine Kraftfahrzeug-Klimaanlage 1 mit einem Gebläse 2, einem Verdampfer 3 und einem Heizer 4 gemäß dem Ausführungsbeispiel weist einen im Prinzip herkömmlichen Aufbau auf, wie er ein Fig. 1 und 3 schematisch dargestellt ist. Die vom Gebläse 2 angesaugte Luft, wobei es sich um Frischluft aus der Umgebung und/oder Umluft aus dem Fahrzeuginnenraum handeln kann, wird durch den Verdampfer 3 geleitet. Am Verdampferausgang ist ein erster Temperaturfühler 5 angeordnet, welcher den Istwert der Lufttemperatur am Verdampferaustritt ermittelt und einem Microcontroller 6 zu Verfügung stellt, auf dessen Funktion an späterer Stelle näher eingegangen wird.

Hinter dem Verdampfer 3 ist besagter Heizer 4 und parallel zu demselben ein Kaltluft-Bypass 7 vorgesehen. Die Luftverteilung auf den Heizer 4 und den Kaltluft-Bypass 7 erfolgt mittels einer Temperaturklappe 8, welche von einem Stellmotor 9 verstellbar ist. Der Stellmotor 9 ist ebenfalls mit dem Microcontroller 6 verbunden und empfängt von demselben Stellsignale. Hinter dem Heizer 4 ist ein zweiter Temperaturfühler 10 angeordnet, der den Istwert der Lufttemperatur am Heizeraustritt ermittelt und dem Microcontroller 6 zu Verfügung stellt. Dem Heizer 4 und Kaltluft-Bypass 7 nachgeordnet ist ein Mischraum 11 angeordnet, von dem aus eine Mehrzahl von mittels Klappen (nicht dargestellt) geregelten Luftkanälen (vorliegend sind der Defrost-Luftkanal DEF, Belüftungs-Luftkanal BEL, Luftkanal zum Fußraum FUSS angedeutet) abzweigen und die temperierte Luft dem Fahrzeuginnenraum zuführen.

Der Verdampfer 3 ist Teil eines Kältemittelkreislaufs 12, in welchem ein Kältemittel strömt, vorliegend R134a. Das Kältemittel wird in dem Kältemittelkreislauf 12 (siehe Fig. 3) mit Hilfe eines Kältemittelkompressors 13 umgewälzt. Beim Kältemittelkompressor 13 handelt es sich vorliegend um einen kostengünstigen Fixvolumen-Kompressor, welcher das Kältemittel verdichtet. Das heiße, verdichtete Kältemittel gelangt ausgehend vom Kompressor 13 zuerst zu einem Kondensator 14, in welchem es mittels von einem Gebläse (nicht dargestellt) angesaugter Umgebungsluft, die den Kondensator 14 durchströmt, abgekühlt wird. Anschließend sind im Kältemittelkreislauf 12 ein Expansionsventil 16, über welches das verdichtete Kältemittel entspannt wird, und - demselben nachfolgend angeordnet - besagter Verdampfer 3 angeordnet, in welchem das entspannte, kalte Kältemittel Wärme vom den Verdampfer 3 durchströmenden Luftstrom aufnimmt. Der Kältemittelkompressor 13 ist, wie auch der Stellmotor 9 der Temperaturklappe 8, mit dem Microcontroller 6 verbunden, wobei vorliegend der Kompressor 13 in Abhängigkeit eines entsprechenden Signals des Microcontrollers 6 über eine pulsweitenmoduliert angesteuerte Magnetkupplung 17 antreibbar ist, wie in Fig. 3 angedeutet.

Der Heizer 4 ist Teil eines Motor-Kühlmittelkreislaufs 18, in welchem Wasser als Kühlmittel strömt, das von einer Kühlmittelpumpe umgewälzt wird. Der Kühlmittelkreislauf 18 ist auf an sich bekannte Weise ausgebildet und daher nicht näher dargestellt. Hierbei ist der Heizer 4 in einem absperrbaren Teil des Kühlmittelkreislaufs 18 angeordnet. Zum Absperren des Teils, in welchem der Heizer 4 angeordnet ist, ist im Kühlmittelkreislauf 18 - in Strömungsrichtung des Kühlmittels gesehen - hinter dem Heizer 4 ein Absperrventil 19 angeordnet. Das Absperrventil 19 ist ebenfalls mit dem Microcontroller 6 verbunden.

Der Microcontroller 6 ist, wie in Fig. 1 angedeutet, mit den beiden Temperaturfühlern 5 und 10 verbunden, von denen er Messdaten empfängt. Ferner ist er mit der Magnetkupplung 17 des Kompressors 13 vom Kältemittelkreislauf 12, dem Stellmotor 9 der Temperaturklappe 8 und dem Absperrventil 19 des Kühlmittelkreislaufs 18 verbunden, deren Funktion, Stellbewegungen o.ä. er regelt.

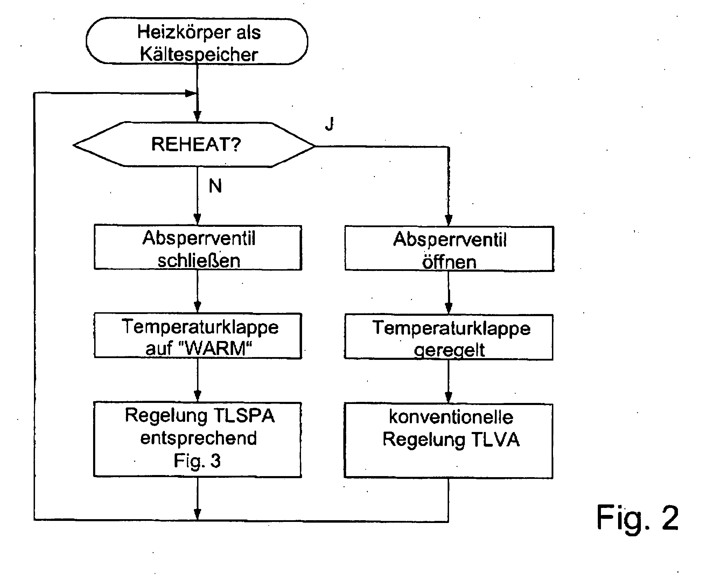

Die Regelung des Kühlmittelkreislaufs 18 und des Kältemittelkreislaufs 12 erfolgt im Normalbetrieb auf an sich bekannte Weise, d.h. der Verdampfer 3, der in jedem Betriebszustand von der dem Fahrzeuginnenraum zuzuführenden Luft durchströmt wird, wird bei laufendem Motor von Kältemittel durchströmt, so dass die denselben durchströmende Luft gekühlt wird. Geregelt durch die Stellung der Temperaturklappe 8 durchströmt die vom Verdampfer 3 kommende kalte Luft anschließend den Kaltluft-Bypass 7 im Falle eines Kühlbedarfs und im Falle eines Heizbedarfs den Heizer 4. Im Falle einer Mischtemperierung wird ein Teilluftstrom durch den Kaltluft-Bypass 7 und der restliche Teilluftstrom durch den Heizer 4 geleitet, wobei sich die Teilluftströme anschließend im Mischraum 11 vermischen bevor die derart temperierte Luft dem Fahrzeuginnenraum zugeführt wird. Der Heizer 4 wird bei geringen Außentemperaturen von heißem, vom Motor-Kühlkreislauf 18 kommendem Kühlmittel durchströmt, um im Falle eines Heizbedarfs eine ausreichende Heizleistung zur Verfügung stellen zu können. Diese Regelung ist in Fig. 2 im rechten Zweig dargestellt (Reheat-Betrieb - Ja).

Sind die Außentemperaturen jedoch relativ hoch, und ist daher (vorläufig) nicht mit einem Heizbedarf zu rechnen, so wird das im Heizer 4 enthaltene Kühlmittel als Kältespeicher verwendet, wofür das Absperrventil 19 im Kühlmittelkreislauf 18, welches vorliegend in Strömungsrichtung des Kühlmittels gesehen hinter dem Heizer 4 angeordnet ist, geschlossen wird (linker Zweig in Fig. 2). Die Zirkulation des Motor-Kühlmittels ist über einen entsprechenden Bypass (nicht dargestellt) sichergestellt. Um den Heizer 4 "beladen" zu können, wird überschüssige Kälteleistung durch eine entsprechende Regelung der Temperaturklappenstellung (Temperaturklappe 8 steht auf "warm") an das im Heizer 4 enthaltene Kühlmittel abgegeben und hierin gespeichert. Bauartbedingt wird der Fixvolumen-Kompressor 13 in seinem optimalen Betriebspunkt betrieben, wobei die erzeugte Kälte direkt an die dem Fahrzeuginnenraum zuzuführende Luft und/oder an den Heizer als Zwischenspeicher abgegeben werden kann. Ist ausreichend Kälte im Heizer gespeichert, so kann der Kompressor 13 temporär abgeschaltet werden. Somit kann der Kältemittelkompressor 13 stets in seinem optimalen Betriebsbereich arbeiten und die ggf. überschüssige Kälte kann im Heizer zwischengespeichert und bedarfsgerecht wieder abgerufen werden. Es ist daher in Abhängigkeit des Betriebs des Kältemittelkompressors 13 ein regelmäßiger Wechsel zwischen einem Durchströmen des Kaltluft-Bypases 7 und des als Kältespeicher betriebenen Heizers 4 im Kühlbetrieb möglich, wobei die Lufttemperatur im Fahrzeuginnenraum im Wesentlichen konstant gehalten werden kann.

Ebenfalls kann beispielsweise bei überschüssiger Energie im Falle einer Talfahrt unter Nutzung des Motors als Bremse, die zu viel erzeugte Kälte, welche ansonsten verloren wäre, im Heizer gespeichert werden.

Bei Bedarf, also bei abgeschaltetem Kältemittelkompressor 13, beispielsweise nach einem vollständigen Beladen des Heizers (bei abgekoppeltem Kältemittelkompressor 13) oder bei einem Motorstopp (bspw. bei einem rein mechanisch über den Motor angetriebenem Kältemittelkompressor 13), wird durch eine entsprechende Stellung der Temperaturklappe 8 auf "warm" bei beladenem Heizer 4 die zu kühlende Luft nicht durch den Bypass 7 sondern durch den Heizer 4 geleitet, in welchem die überschüssige Wärme vom Kühlmittel aufgenommen und dadurch die durchströmende Luft gekühlt wird. Die Kühlleistung hierbei ist begrenzt, jedoch reicht sie für einen Zwischenbetrieb, bspw auch für einen Idle-Stop Betrieb, bspw. an einer roten Ampel, aus, um den Komfort im Fahrzeuginnenraum aufrechtzuerhatten. Im Falle eines eingeschalteten Motors ergibt sich somit üblicherweise bei einem normalen Kühlbetrieb ein laufender Wechseln zwischen laufendem und stehendem (d.h. abgekoppelten) Kältemittelkompressor 13 und ein entsprechender Wechsel des Luftströmungswegs, nämlich durch den Kältemittel-Bypass und den als (Zwischen-)Kältespeicher genutzten Heizer. Dies ergibt eine optimale Energienutzung im Wesentlichen ohne Komforteinbußen.

Bei längerem Ausfall der Kühlung kann der Motor oder ein den Kältemittelkompressor 13 antreibender Elektromotor für ein bedarfsgerechtes Umwälzen des Kältemittelkreislaufs 12 sorgen, so dass der Verdampfer 3 wieder seine Kühlfunktion für die durchströmende Luft erfüllt, d.h. in diesem Fall wird die Temperaturklappe 8 wieder in die "normale" Kühlstellung gebracht.

Die Regelung des Kältemittelkreislaufs 12 bei einem Betrieb, in welchem die Möglichkeit einer Speicherung überschüssiger Kälte im Heizer 4 besteht, erfolgt entsprechend Fig. 3. Hierbei wird aus der hinter dem im Speicherbetrieb als Kältespeicher zum Speichern überschüssiger Kälte dienenden Heizer 4 mit Hilfe des zweiten Temperaturfühlers 10 gemessenen Temperatur der Luft TLSPA, welche mit einem Sollwert (Sollwert Verdampfertemperatur) verglichen wird, die Stellbewegung für die Magnetkupplung 17 des das Kältemittel umwälzenden Kompressors 13 unter Berücksichtigung eines PI-Reglers 18 und einer pulsweitenmodulierten Umsetzung des Messwerts (in Fig. 3 symbolisch dargestellt und mit dem Bezugszeichen 19 bezeichnet) veranlasst. Der stets in seinem Betriebsoptimum arbeitende Kältemittelkompressor 13 erzeugt in der Regel überschüssige Kälteleistung, die im Heizer 4 zwischengespeichert wird. Ist der Speicher vollständig geladen (Temperatur der Luft ermittelt durch den zweiten Temperaturfühler 10), so wird die Magnetkupplung 17 geöffnet, d.h. der Kompressor 13 steht. Die Kühlung der dem Fahrzeuginnenraum zuzuführenden Luft wird vom Heizer 4 übernommen. Steigt die Temperatur (zweiter Temperaturfühler 10) über einen bestimmten Wert, so schließt die Magnetkupplung 17 wieder, d.h. der Kompressor 13 wird wieder angetrieben. Die Kühlung kommt, sobald der Verdampfer ausreichend gekühlt ist, wieder vom Verdampfer. Überschüssige Kälte wird wiederum im Heizer zwischengespeichert.

Im Winter, also bei geringen Außentemperaturen, kann die Klimaanlage zwecks Energieeinsparung auch im Reheat-Betrieb betrieben werden, jedoch ist hierbei dann kein Kältespeicherbetrieb des Heizers möglich. Dies ist, da im Winter in aller Regel keine Kühlfunktion erforderlich ist, nicht nachteilig.

Bei den verwendeten Komponenten für die Regelung im Falle eines Kältespeicherbetriebs handelt es sich um Komponenten, die in den meisten herkömmlichen Klimaanlagen vorhanden sind, d.h. es sind keine oder nur unwesentliche konstruktive Änderungen erforderlich. Bei manchen Klimaanlagen ist das Vorsehen des wasserseitigen Absperrventils, welches jedoch als sogenanntes "Sommerventil" häufig in derartigen Systemen zur Vermeidung von Restaufheizungen vorhanden ist, oder das Vorsehen des zweiten Temperaturfühlers erforderlich, wobei hierfür auch ein im Mischraum bereits vorhandener Temperaturfühler verwendet werden kann. Die Änderungen betreffen somit insbesondere die Regelung, welche für ein Beladen des Heizers als Kältespeicher und für einen Kältespeicherbetrieb entsprechend angepasst werden muss.

Gemäß einer leicht abgewandelten Regelung der Magnetkupplung ist eine herkömmliche Zweipunktregelung vorgesehen.

Die Magnetkupplung kann gemäß einer weiteren Variante auch durch ein Ein/Aus-Steuerventil mit schneller PWM-Ansteuerung ersetzt werden.

Die Regelung, welche vorstehend anhand von Temperaturfühlem, also luftseitig erfolgt, kann entsprechend auch für eine wasserseitig geregelte Klimaanlage angepasst werden, d.h. die Temperaturfühler messen bspw. die Kühlmitteltemperatur im als Kältespeicher verwendeten Heizer an Stelle der Lufttemperatur am Luftaustritt aus dem Heizer.

Die Regelung ist - obwohl vorstehend nicht ausdrücklich erwähnt - sowohl für einzonige als auch für mehrzonige Klimaanlagen geeignet.

Neben dem vorstehend genannten Kältemittel R134a kann im Kältemittelkreislauf 12 auch R744 oder ein anderes, geeignetes Kältemittel verwendet werden.

## Patentansprüche

1. Verfahren zum Betreiben einer Klimaanlage mit einem Verdampfer (3), der in einem von einem Kältemittelkompressor (13) umgewälzten Kältemittelkreislauf (12) angeordnet ist, und einem Heizer (4), der in einem Kühlmittelkreislauf (18) angeordnet ist, wobei der Heizer (4) als Kältemittelspeicher beladen wird und temporär die Funktion des Verdampfers (3) übernimmt und die durchströmende Luft kühlt, wobei eine Temperaturklappe (8) vorgesehen ist, welche die Verteilung des Luftstroms auf den Heizer (4) und einen Kaltluft-Bypass (7) ermöglicht, wobei der Kühlmittelkreislauf (18), in welchem der Heizer (4) angeordnet ist, in normaler Strömungsrichtung des Kühlmittels nach dem Heizer (4) ein regelbares Absperrventil (19) aufweist, welches bei einer Funktion des Heizers (4) als Kältespeicher geschlossen ist, **dadurch gekennzeichnet, dass** die Temperaturklappe (8) zum Beladen des Heizers (4) als Kältespeicher den Kaltluft-Bypass (7) zumindest teilweise versperrt, und wobei die Temperaturklappe (8) in einem Kühlbetrieb unter Nutzung der im Heizer (4) gespeicherten Kälte den Kaltluft-Bypass (7) zumindest teilweise versperrt.

2. Verfahren nach Anspruch 1, **dadurch gekennzeichnet, dass** der Kältemittelkompressor (13) ein Fixvolumen-Kompressor ist, der in seinem optimalen Betriebspunkt betrieben wird.

3. Verfahren nach Anspruch 1 oder 2, **dadurch gekennzeichnet, dass** der Kältemittelkompressor (13) überschüssige Kälte erzeugt, die temporär im Heizer (4) zwischengespeichert werden kann.

4. Verfahren nach einem der vorhergehenden Ansprüche, **dadurch gekennzeichnet, dass** bei mittleren Umgebungstemperaturen von über 20°C, insbesondere von über 25°C, und einer darunterliegenden, eingestellten Temperatur für die Regelung der Fahrzeuginnenraum-Temperatur der Heizer (4) bei überschüssiger Kälteleistung des Verdampfers (3) als Kältespeicher beladen wird.

5. Verfahren nach einem der vorhergehenden Ansprüche, **dadurch gekennzeichnet, dass** mindestens ein in Luftströmungsrichtung hinter dem Verdampfer (3) angeordneter erster Temperaturfühler (5) vorgesehen ist, welcher Messwerte für die Beladung des Heizers (4) als Kältespeicher ermittelt und einem Microcontroller (6) zur Verfügung stellt.

6. Verfahren nach einem der vorhergehenden Ansprüche, **dadurch gekennzeichnet, dass** hinter dem Heizer (4) ein zweiter Temperaturfühler (10) vorgesehen ist, welcher Messwerte für die Entladung des als Kältespeicher genutzten Heizers (4) ermittelt und einem Microcontroller (6) zur Verfügung stellt.

7. Verfahren nach einem der vorhergehenden Ansprüche, **dadurch gekennzeichnet, dass** ein erster Temperaturfühler im Bereich des Verdampfers (3) im Kältemittelkreislauf (12) angeordnet ist, welcher Messwerte für die Beladung des Heizers (4) als Kältespeicher ermittelt und einem Microcontroller (6) zur Verfügung stellt.

8. Verfahren nach einem der vorhergehenden Ansprüche, **dadurch gekennzeichnet, dass** im Kühlmittelkreislauf (18) im Bereich des Heizers (4) ein zweiter Temperaturfühler (10) vorgesehen ist, welcher Messwerte für die Entladung des als Kältespeicher genutzten Heizers (4) ermittelt und einem Microcontroller (6) zur Verfügung stellt.

9. Klimaanlage mit einem Kältemittelkreislauf (12) mit mindestens einem Verdampfer (3), mindestens einem in Luftströmungsrichtung hinter dem Verdampfer (3) oder im Bereich des Verdampfers angeordneten ersten Temperaturfühler (5), einem Kühlmittelkreislauf (18) mit mindestens einem Heizer (4), einem hinter dem Heizer (4) oder im Bereich des Heizers angeordneten zweiten Temperaturfühler (10), **gekennzeichnet durch** eine Regelung des Kältemittelkreislaufs (12) und des Kühlmittelkreislaufs (18) zum Beladen des Heizers (4) als Kältespeicher mittels eines Verfahrens nach einem der vorstehenden Ansprüche.

10. Klimaanlage nach Anspruch 9, **dadurch gekennzeichnet, dass** im Kältemittelkreislauf (12) ein Fixvolumen-Kompressor angeordnet ist, welcher bei Betrieb in seinem optimalen Betriebspunkt arbeitet.

11. Klimaanlage nach Anspruch 10, **dadurch gekennzeichnet, dass** der Fixvolumen-Kompressor in Verbindung mit einer Magnetkupplung (17) steht.

12. Klimaanlage nach einem der Ansprüche 9 bis 11, **dadurch gekennzeichnet, dass** im Kühlmittelkreislauf (18) in normaler Strömungsrichtung des Kühlmittels hinter dem Heizer (4) ein Absperrventil (19) angeordnet ist, über welches der Teil des Kühlmittelkreislaufs (18), in welchem der Heizer (4) angeordnet ist, vom restlichen Teil des Kühlmittelkreislaufs (18) abtrennbar ist.

## Claims

1. A method for operating an air conditioning system comprising an evaporator (3) disposed in a refrigerant circuit (12) which is circulated by a refrigerant compressor (13), and a heater (4) disposed in a coolant circuit (18), wherein the heater (4) is charged as refrigerant accumulator and temporarily performs the function of the evaporator (3) and cools the air flowing there-through, wherein a temperature flap (8) is provided, which enables the air flow to be distributed to the heater (4) and a cold air bypass (7), wherein the coolant circuit (18) in which the heater (4) is disposed comprises a controllable shutoff valve (19) which is located downstream of the heater (4) in the normal direction of flow of the coolant, and which is closed when the heater (4) functions as cold accumulator, **characterized in that** the temperature flap (8) blocks the cold air bypass (7) at least partially to charge the heater (4) as cold accumulator, and wherein the temperature flap (8) blocks the cold air bypass (7) at least partially during cooling operation using the cold stored in the heater (4).

2. The method according to claim 1, **characterized in that** the refrigerant compressor (13) is a fixed volume compressor which is operated at the optimal operating point thereof.

3. The method according to claim 1 or 2, **characterized in that** the refrigerant compressor (13) produces excess cold which can be stored temporarily in the heater (4).

4. The method according to one of the preceding claims, **characterized in that**, at mean ambient temperatures of over 20°C, in particular over 25°C, and at a lower set temperature for regulating the temperature of the vehicle interior, the heater (4) is charged as cold accumulator if the cold output by the evaporator (3) is excessive.

5. The method according to one of the preceding claims, **characterized in that** at least one first temperature sensor (5) is provided, which is disposed downstream of the evaporator (3) in the direction of air flow and ascertains measured values for charging the heater (4) as cold accumulator, and provides same to a microcontroller (6).

6. The method according to one of the preceding claims, **characterized in that** a second temperature sensor (10) is provided downstream of the heater (4), which ascertains measured values for the discharge of the heater (4) utilized as cold accumulator, and provides same to a microcontroller (6).

7. The method according to one of the preceding claims, **characterized in that** a first temperature sensor is disposed in the refrigerant circuit (12) in the region of the evaporator (3), which ascertains measured values for charging the heater (4) as cold accumulator, and provides same to a microcontroller (6).

8. The method according to one of the preceding claims, **characterized in that** a second temperature sensor (10) is provided in the coolant circuit (18) in the region of the heater (4), which ascertains measured values for the discharge of the heater (4) utilized as cold accumulator, and provides same to a microcontroller (6).

9. An air conditioning system comprising a refrigerant circuit (12) having at least one evaporator (3), at least one first temperature sensor (5) disposed downstream of the evaporator (3) in the direction of air flow or in the region of the evaporator, a coolant circuit (18) having at least one heater (4), a second temperature sensor (10) disposed downstream of the heater (4) or in the region of the heater, **characterized by** a regulation of the refrigerant circuit (12) and the coolant circuit (18) for charging the heater (4) as cold accumulator using a method according to one of the preceding claims.

10. The air conditioning system according to claim 9, **characterized in that** a fixed volume compressor is disposed in the refrigerant circuit (12), which functions at the optimal operating point thereof during operation.

11. The air conditioning system according to claim 10, **characterised in that** the fixed volume compressor is connected to a magnetic coupling (17).

12. The air conditioning system according to one of the preceding claims 9 to 11, **characterized in that** a shutoff valve (19) is disposed in the coolant circuit (18)
downstream of the hearer (4) in the normal direction of flow of the coolant via which the part of the coolant circuit (18) in which the heater (4) is disposed can be separated from the remaining part of the coolant circuit (18).

## Revendications

1. Procédé permettant de faire fonctionner un système de climatisation comprenant un évaporateur (3) qui est disposé dans un circuit de fluide frigorigène (12) mis en circulation par un compresseur de fluide frigorigène (13), et un dispositif de chauffage (4) qui est disposé dans un circuit de liquide de refroidissement (18), où le dispositif de chauffage (4) est chargé comme accumulateur de fluide frigorigène et assure temporairement la fonction de l'évaporateur (3) et refroidit l'air en circulation, où il est prévu un volet de température (8) qui permet la répartition du flux d'air, au dispositif de chauffage (4) et à une dérivation d'air froid (7), où le circuit de liquide de refroidissement (18), dans lequel est disposé le dispositif de chauffage (4), présente, en aval du dispositif de chauffage (4), dans la direction normale d'écoulement du liquide de refroidissement, une soupape d'arrêt réglable (19) qui est formée lorsque le dispositif de chauffage (4) fonctionne comme accumulateur de froid,
**caractérisé en ce que** le volet de température (8) servant à charger le dispositif de chauffage (4) utilisé comme accumulateur de froid obture au moins partiellement la dérivation d'air froid (7), et où le volet de température (8), au cours d'un fonctionnement en mode refroidissement utilisant le froid accumulé dans le dispositif de chauffage (4), obture au moins partiellement la dérivation d'air froid (7).

2. Procédé selon la revendication 1, **caractérisé en ce que** le compresseur de fluide frigorigène (13) est un compresseur à volume fixe qui est actionné à son point de fonctionnement optimal.

3. Procédé selon la revendication 1 ou 2, **caractérisé en ce que** le compresseur de fluide frigorigène (13) produit, en excédent, du froid qui peut être stocké temporairement dans le dispositif de chauffage (4).

4. Procédé selon l'une quelconque des revendications précédentes, **caractérisé en ce que**, dans le cas de températures ambiantes moyennes supérieures à 20°C, en particulier supérieures à 25°C et, dans le cas d'une température réglée à des valeurs inférieures pour la régulation de la température de l'habitacle du véhicule, le dispositif de chauffage (4), dans le cas d'une puissance de réfrigération excédentaire de l'évaporateur (3), est chargé comme accumulateur de froid.

5. Procédé selon l'une quelconque des revendications précédentes, **caractérisé en ce qu'**il est prévu au moins un premier capteur de température (5) disposé en aval de l'évaporateur (3), dans la direction d'écoulement de l'air, capteur de température qui détermine des valeurs mesurées pour la charge du dispositif de chauffage (4) utilisé comme accumulateur de froid et les fournit à un microcontrôleur (6).

6. Procédé selon l'une quelconque des revendications précédentes, **caractérisé en ce qu'**il est prévu, en aval du dispositif de chauffage (4), un deuxième capteur de température (10) qui détermine des valeurs mesurées pour la décharge du dispositif de chauffage (4) utilisé comme accumulateur de froid et les fournit à un microcontrôleur (6).

7. Procédé selon l'une quelconque des revendications précédentes, **caractérisé en ce qu'**un premier capteur de température est disposé dans le circuit de fluide frigorigène (12), dans la zone de l'évaporateur (3), capteur de température qui détermine des valeurs mesurées pour la charge du dispositif de chauffage (4) utilisé comme accumulateur de froid et les fournit à un microcontrôleur (6).

8. Procédé selon l'une quelconque des revendications précédentes, **caractérisé en ce qu'**un deuxième capteur de température (10) est prévu dans le circuit de liquide de refroidissement (18), dans la zone du dispositif de chauffage (4), capteur de température qui détermine des valeurs mesurées pour la décharge du dispositif de chauffage (4) utilisé comme accumulateur de froid et les fournit à un microcontrôleur (6).

9. Système de climatisation comprenant un circuit de fluide frigorigène (12) comportant au moins un évaporateur (3), au moins un premier capteur de température (5) disposé en aval de l'évaporateur (3) ou bien dans la zone de l'évaporateur, dans la direction d'écoulement de l'air, un circuit de liquide de refroidissement (18) comportant au moins un dispositif de chauffage (4), un deuxième capteur de température (10) disposé en aval du dispositif de chauffage (4) ou bien dans la zone du dispositif de chauffage, **caractérisé par** une régulation du circuit de fluide frigorigène (12) et du circuit de liquide de refroidissement (18) pour la charge du dispositif de chauffage (4) utilisé comme accumulateur de froid, au moyen d'un procédé selon l'une quelconque des revendications précédentes.

10. Système de climatisation selon la revendication 9, **caractérisé en ce qu'**un compresseur à volume fixe est disposé dans le circuit de fluide frigorigène (12), compresseur à volume fixe qui, en service, est actionné à son point de fonctionnement optimal.

11. Système de climatisation selon la revendication 10, **caractérisé en ce que** le compresseur à volume fixe est raccordé à un accouplement à aimant (17).

12. Système de climatisation selon l'une quelconque des revendications 9 à 11, **caractérisé en ce qu'**une soupape d'arrêt (19) est disposée, dans le circuit de liquide de refroidissement (18), en aval du dispositif de chauffage (4), dans la direction normale d'écoulement du liquide de refroidissement, soupape d'arrêt par laquelle la partie du circuit de liquide de refroidissement (18), dans laquelle est disposé le dispositif de chauffage (4), peut être séparée de la partie restante du circuit de fluide frigorigène (18).
